Europäisches Patentamt

**European Patent Office**

**Office européen des brevets**

(11) Numéro de publication: **0 286 517 B1**

(12) **FASCICULE DE BREVET EUROPEEN**

(45) Date de publication de fascicule du brevet: **05.08.92** �[51] Int. Cl.⁵: **H02B 7/06, E04H 5/04**

(21) Numéro de dépôt: **88400781.6**

(22) Date de dépôt: **30.03.88**

(54) **Dispositif de ventilation d'un poste de transformation électrique.**

(30) Priorité: **09.04.87 FR 8705075**

(43) Date de publication de la demande:
**12.10.88 Bulletin 88/41**

(45) Mention de la délivrance du brevet:
**05.08.92 Bulletin 92/32**

(84) Etats contractants désignés:
**BE CH DE ES GB IT LI**

(56) Documents cités:
**FR-A- 2 128 539**
**FR-A- 2 353 150**

**PATENT ABSTRACTS OF JAPAN, vol. 3, no.**
**145 (E-155), 30 novembre 1979, page 6 E 155;**
**& JP-A-54 122 843**

(73) Titulaire: **MERLIN GERIN**
**Rue Henri Tarze**
**F-38050 Grenoble Cédex(FR)**

(72) Inventeur: **Jacquot, Alain**
**Merlin Gérin Service Brevets**
**F-38050 Grenoble Cédex(FR)**
Inventeur: **Tombois, Jean-Marc**
**Merlin Gérin Service Brevets**
**F-38050 Grenoble Cédex(FR)**
Inventeur: **Baron, Robert**
**Merlin Gérin Service Brevets**
**F-38050 Grenoble Cédex(FR)**
Inventeur: **Joubert, Daniel**
**Merlin Gérin Service Brevets**
**F-38050 Grenoble Cédex(FR)**
Inventeur: **Jourdan, André**
**Merlin Gérin Service Brevets**
**F-38050 Grenoble Cédex(FR)**

(74) Mandataire: **Kern, Paul et al**
**Merlin Gerin Sce. Brevets 20, rue Henri Tarze**
**F-38050 Grenoble Cédex(FR)**

## Description

L'invention est relative à un dispositif de ventilation d'un poste de transformation électrique ayant une cabine constituée par quatre parois latérales, un plancher et un toit, comprenant une grille de ventilation basse disposée à la base de l'une des parois latérales et des orifices de ventilation haute ménagés dans la partie haute de la cabine.

Le document FR-A-2353150 décrit un poste de transformation notamment moyenne tension, basse tension, ayant des ouvertures dans les parois ou les murs de la cabine, pour assurer une ventilation naturelle des appareils logés dans la cabine en particulier du transformateur. Ces ouvertures sont obturées par des grilles destinées à empêcher toute pénétration d'eau ou de corps étrangers à l'intérieur de la cabine. Les grilles, disposées à la partie haute, sont coiffées par un auvent qui définit un parcours en chicane et n'assure pas toujours une ventilation efficace notamment, de la partie haute du poste où des phénomènes de condensation peuvent se produire.

La présente invention a pour but de réaliser une ventilation améliorée tout en respectant l'esthétique du poste et ce but est atteint par la mise en oeuvre des caractéristiques de la revendication 1.

L'adjonction d'auvents réduit l'aspect massif du bloc constituant la cabine du poste de transformation et permet de reporter vers l'extérieur de la cabine les orifices de ventilation ou d'aération haute de cette cabine. L'avancée constituée par l'auvent communique avec l'intérieur de la cabine, et est ouverte à la base pour permettre une évacuation de l'air à travers l'auvent. Des orifices supérieurs de ventilation sont avantageusement prévus sur l'auvent dans la zone de raccordement de ce dernier au toit, à l'aplomb de la paroi. Ces orifices de ventilation haute sont pratiquement invisibles de l'extérieur du poste, tout au moins pour un observateur placé devant le poste. La grille de ventilation basse comporte des ailettes ou lamelles en forme de chevrons qui définissent un parcours en chicane d'entrée d'air évitant toute pénétration de corps étrangers ou de pluie à l'intérieur de la cabine. Les orifices de ventilation haute sont munis d'une manière analogue, d'ailettes verticales empêchant la pénétration de la pluie ou d'autres objets dans la cabine. Sous les orifices supérieurs de ventilation haute, on dispose avantageusement un déflecteur, qui collecte les gouttes d'eau susceptibles de cheminer le long du toit à proximité des orifices d'aération pour les évacuer par l'avancée du toit à l'extérieur de la cabine. Pour limiter l'entrée d'eau par les orifices supérieurs d'aération haute, le toit comporte avantageusement des rainures formant des rigoles d'évacuation d'eau, ces rainures encadrant des parties en saillies dans lesquelles sont ménagés lesdits orifices supérieurs. Le toit est de préférence plat et déborde de part et d'autre des parois latérales par deux avancées selon l'invention, qui lui confèrent un aspect de petite maison. Le poste peut être du type préfabriqué en béton ou en tôle partiellement enterré ou non, dont la face avant présente des portes d'entrée dans la cabine. L'une des portes permet l'introduction du transformateur avantageusement disposé le long de la paroi latérale équipée de la grille de ventilation basse pour faciliter la ventilation dans cette zone chauffée par le transformateur. La deuxième porte de la face avant donne accès au tableau moyenne tension et basse tension du poste pour les différentes manoeuvres et pour l'entretien du poste.

La cabine est avantageusement de forme rectangulaire et le transformateur est disposé le long de l'une des petites parois latérales, laquelle est équipée de la grille de ventilation basse. Les deux auvents coiffent les deux petites parois latérales de la cabine et les rainures ou rigoles du toit s'étendent dans la direction longitudinale du toit. La disposition de la grille de ventilation basse sur une seule paroi du poste permet d'orienter celui-ci pour limiter la nuisance due au bruit. Il est également possible de modifier la disposition interne du poste, en disposant le transformateur le long de la paroi opposée et bien entendu en inversant également la position de la grille de ventilation basse et celle des portes de la face avant.

D'autres avantages et caractéristiques ressortiront plus clairement de la description qui va suivre d'un mode de mise en oeuvre de l'invention donné à titre d'exemple non limitatif et représenté aux dessins annexés dans lesquels :

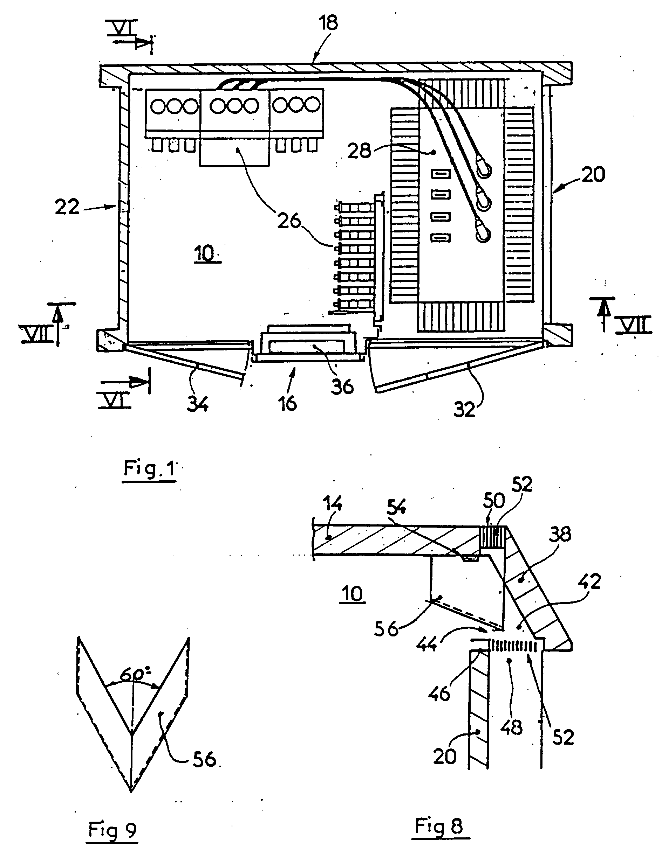

- la figure 1 est une vue en plan du poste équipé du dispositif de ventilation selon l'invention, le toit étant supposé enlevé;

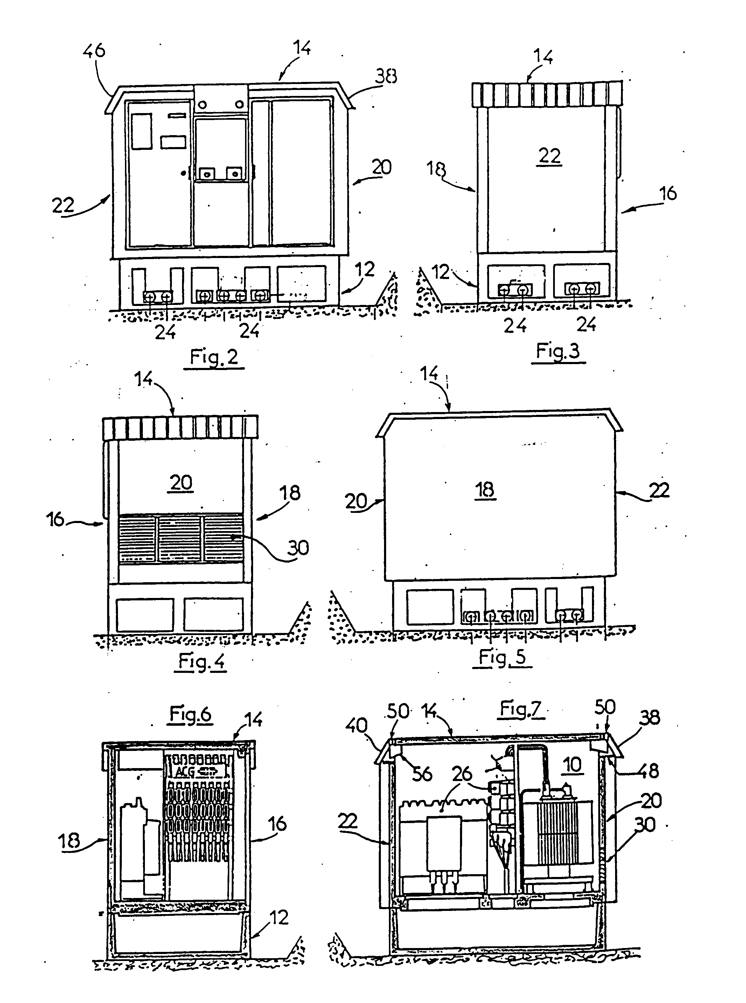

- la figure 2 est une vue de la face avant du poste selon la figure 1;
- les figures 3,4 et 5 sont respectivement des vues de gauche, de droite et d'arrière du poste selon la figure 1;
- la figure 6 est une coupe suivant la ligne VI-VI de la figure 1;
- la figure 7 est une coupe suivant la ligne VII-VII de la figure 1;
- la figure 8 est une vue à échelle agrandie d'un détail de la figure 7 montrant les orifices de ventilation haute;
- la figure 9 est une vue de côté du déflecteur illustré par la figure 8;
- les figures 10 et 11 sont des vues schématiques en perspective de l'auvent du poste selon la figure 1 montrant des orifices de ventilation haute.

Sur les figures, un poste de transformation comprend une cabine 10 de forme parallélépipédique ayant un fond ou plancher 12, un toit 14 et quatre parois latérales verticales 16,18,20,22, dont deux 16,18 constituent les grandes faces et deux 20,22, les petites faces du parallélépipède. Le fond 12 est agencé en caisson, qui après installation du poste se trouve enfoui dans la terre de manière à réduire la hauteur visible du poste. Les câbles 24, moyenne tension et basse tension d'entrée et de sortie du poste s'étendent dans le caisson 12 et sortent en souterrain d'une manière bien connue des spécialistes. Dans la cabine 10 sont logés les tableaux moyenne tension et basse tension 26, ainsi qu'un transformateur 28 s'étendant le long de la petite paroi latérale 20. La base de la petite paroi latérale 20, adjacente au transformateur 28, est agencée en grille 30 permettant une entrée d'air de ventilation de la cabine 10. La grille 30 est constituée par des ailettes ou lamelles en forme de chevrons dont l'écartement est suffisamment faible pour éviter toute introduction de corps étrangers à l'intérieur de la cabine 10. Sur la face avant 16 du poste sont prévues deux portes, une 32 en regard du transformateur 28, et l'autre 34 permettant l'accès au tableau 26 dans la cabine 10. Entre les deux portes 32,34 est disposé un coffret 36 contenant les auxiliaires basse tension du poste. Un tel poste est bien connu des spécialistes et il est inutile de le décrire plus en détail.

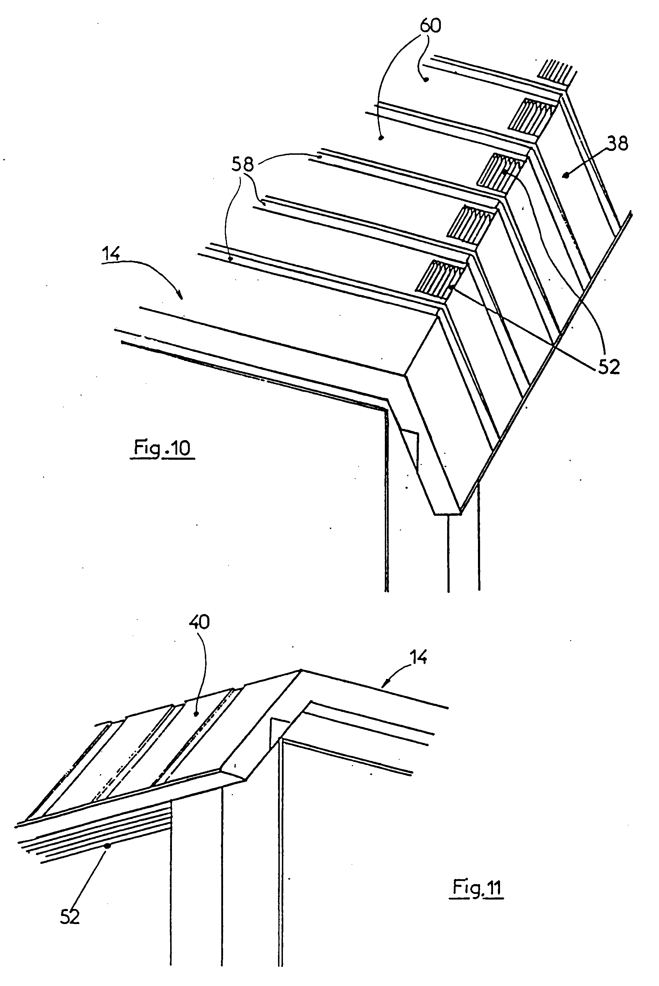

En se referant plus particulièrement aux figures 7 à 11, on voit que le toit plat 14 est prolongé sur les deux côtés des petites parois latérales 20,22 par des auvents 38,40 formant des avancées 42 en saillies vers l'extérieur des parois 20,22. Les auvents 38,40 sont symétriques et seul l'un 38, d'entre eux est décrit ci-dessous, l'autre étant identique. L'avancée 42 coiffée par l'auvent 38 communique librement avec l'intérieur de la cabine 10 par un intervalle 44 ménagé entre le toit 14 et le bord supérieur 46 de la paroi 20 qui s'arrête sensiblement au niveau de la base de l'auvent 38. L'avancée 42 communique d'autre part librement avec l'extérieur, d'une part, par sa base ouverte formant des orifices inférieurs 48 de ventilation haute et d'autre part, par des orifices supérieurs 50 de ventilation haute prévus dans la zone de raccordement de l'auvent 38 au toit 14. Ces orifices 48,50 de ventilation haute sont munis de grilles constituées par des ailettes verticales 52 disposées parallèlement les unes aux autres à faible intervalle pour éviter une introduction de corps étrangers à l'intérieur de la cabine 10. L'eau de pluie passant par l'orifice supérieur 50, tombe normalement dans l'avancée 42 à l'extérieur de la paroi 20 mais pour limiter les risques de ruissèlement de gouttes 54 le long du toit 14, un déflecteur 56 en forme de chenal en V incliné, est disposé sous l'orifice supérieur 50 de manière à guider l'eau vers l'avancée 42 à l'extérieur de la cabine 10. Le toit 14 plat présente une série de rainures parallèles 58, s'étendant longitudinalement pour constituer des rigoles d'évacuation de l'eau pluviale vers les auvents 38,40. Chaque paire de rainures 58 délimite une bande en saillie 60 sur laquelle sont ménagés les orifices supérieurs de ventilation 50. Cette disposition évite toute pénétration de l'eau ruisselant dans les rainures 58 par les orifices supérieurs 50. Les rainures 58 se prolongent sur les auvents 38,40 mais il est clair que leur utilité est moindre sur ces auvents. Sous chaque orifice supérieur de ventilation 50 est disposé un déflecteur 56, mais il est possible de réaliser la fonction d'évacuation de l'eau par un déflecteur unique s'étendant le long de la paroi latérale 20 sur toute sa longueur.

Le système de ventilation selon l'invention assure une aération efficace de la cabine 10, notamment dans la partie supérieure au voisinage du toit 14, grâce aux orifices supérieurs 50 de ventilation haute et les auvents 38,40 dissimulent les orifices de ventilation haute tout en améliorant l'esthétique générale du poste. Il convient de noter que le transformateur 28 et la grille de ventilation basse 30 peuvent être disposés du côté de la paroi latérale 22, notamment pour des questions de bruit, auquel cas les portes 32,34 doivent être inversées, ce qui ne pose aucun problème particulier. Le toit 14 peut présenter une certaine inclinaison et, pour certaines applications on peut envisager la suppression des orifices supérieurs 50 ou des orifices inférieurs 48 de ventilation haute sans sortir du cadre de la présente invention.

La cabine 10 peut être réalisée en un matériau quelconque notamment en béton ou en métal et être assemblée en usine ou sur le site à partir d'éléments en forme de plaque.

**Revendications**

1. Dispositif de ventilation d'un poste de transformation électrique ayant une cabine (10) constituée par quatre parois latérales (16,18,20,22), un plancher (12) et un toit (14), comprenant une grille (30) de ventilation basse disposée à la base de l'une (20) des parois latérales et des orifices (48,50) de ventilation haute ménagés dans la partie haute de la cabine, caractérisé en ce que le toit (14) est prolongé par au moins un auvent (38,40) formant une avancée (42) au dessus de l'une (20) des parois, interrompue sur la partie coiffée par l'auvent pour définir entre le bord supérieur (46) de la paroi et le toit (14) un intervalle de communication (44) de la cabine (10) et de l'avancée (42), que l'auvent (38,40) est ouvert à sa base pour définir des orifices inférieurs (48) de ventilation haute entre la paroi (20) et le bord inférieur de l'auvent et que des orifices supérieurs (50) de ventilation haute sont prévus dans la zone de raccordement de l'auvent (38,40) au toit (14).

2. Dispositif selon la revendication 1 caractérisé en ce que les orifices (48,50) de ventilation haute sont munis de grilles (52) à ailettes verticales empêchant la pénétration d'objets à l'intérieur de la cabine (10).

3. Dispositif selon la revendication 1 ou 2, caractérisé en ce que le toit (14) est plat et est prolongé par deux auvents (38,40) formant deux avancées (42) sur deux parois latérales opposées (20,22) et que le toit (14) présente des rainures (58) parallèles longitudinales formant des rigoles d'évacuation de l'eau de pluie et que les orifices (50) supérieurs de ventilation haute sont disposés sur les bandes (60) du toit en saillie, encadrées par les rigoles (58).

4. Dispositif selon l'une quelconque des revendications précédentes, caractérisé en ce que sous les orifices supérieurs (50) de ventilation haute sont disposés des déflecteurs (56) pour récolter l'eau pluviale pénétrant par ces orifices supérieurs et la guider au delà de la paroi (20) sous ledit auvent (38,40).

5. Dispositif selon l'une quelconque des revendications précédentes caractérisé en ce que la cabine (10) de forme rectangulaire comporte des portes d'accès (32,34) disposées sur l'une (16) des grandes faces latérales et une seule grille (30) de ventilation basse sur la petite face latérale (20), le long de laquelle est logé le transformateur (28) du poste.

6. Dispositif selon l'une quelconque des revendications précédentes, caractérisé en ce que les deux petites parois latérales (20,22) sont coiffées par deux auvents (38,40) raccordés par un toit plat (14) nervuré longitudinalement et que des orifices (48,50) de ventilation haute sont prévus le long de ces deux petites parois latérales.

7. Dispositif selon l'une quelconque des revendications précédentes, caractérisé en ce que la cabine est du type préfabriqué en béton.

**Claims**

1. A ventilation device of an electrical transformer substation having a cabin (10) formed by four side walls (16,18,20,22), a floor (12) and a roof (14), comprising a bottom ventilation grate (30) located at the base of one (20) of the side walls and top ventilation orifices (48,50) arranged in the upper part of the cabin, characterized in that the roof (14) is extended by at least one porch (38,40) forming an overhang (42) above one (20) of the walls, interrupted on the part covered by the porch to define between the top (46) of the wall and the roof (14) a gap (44) communicating between the cabin (10) and the overhang (42), that the porch (38,40) is open at its base to define lower top ventilation orifices (48) between the wall (20) and the bottom edge of the porch (38,40) and that upper top ventilation orifices (50) are provided in the connection zone of the porch (38,40) to the roof (14).

2. The device according to claim 1, characterized in that the top ventilation orifices (48,50) are provided with grates (52) with vertical fins preventing objects from getting into the cabin (10).

3. The device according to claim 1 or 2, characterized in that the roof (14) is flat and is extended by two porches (38,40) forming two overhangs (42) on two opposite side walls (20,22) and that the roof (14) has parallel longitudinal grooves (58) forming rainwater evacuation gutters and that the upper top ventilation orifices (50) are located on the protruding roof bands (60), bounded by the gutters (58).

4. The device according to any one of the above claims, characterized in that under the upper top ventilation orifices (50) there are fitted deflectors (56) to catch the rainwater entering via these upper orifices and to guide it beyond the wall (20) under said overhanging porch (38,40).

5. The device according to any one of the above claims, characterized in that the cabin (10) of rectangular shape comprises access doors (32,34) located on one (16) of the large side walls and a single bottom ventilation grate (30) on the small side wall (20), along which the substation transformer (28) is housed.

6. The device according to any one of the above claims, characterized in that the two small side walls (20,22) are covered by two overhanging porches (38,40) connected by a flat roof (14) with longitudinal grooves and that top ventilation orifices (48,50) are provided along these two small side walls.

7. The device according to any one of the above claims, characterized in that the cabin (10) is of the prefabricated concrete type.

**Patentansprüche**

1. Lüftungssystem für eine Transformatorstation mit einem Gehäuse (10) aus vier Seitenwänden (16, 18, 20, 22), einem Boden (12) und einem Dach (14) sowie einem Boden-Lüftungsgitter (30) im unteren Bereich einer der Seitenwände (20) und Decken-Lüftungsöffnungen (48, 50) im oberen Bereich des Gehäuses, dadurch gekennzeichnet, daß das Dach (14) durch mindestens ein Vordach (38, 40) verlängert ist, welches oberhalb einer der Seitenwände (20) einen zwischen den Auflagepunkten des Vordachs offenen Überstand (42) bildet, um so einen Zwischenraum (44) für den Luftaustausch zwischen Gehäuse (10) und Überstand (42) zu erzeugen, daß das Vordach (38, 40) zur Anbringung von unteren Decken-Lüftungsöffnungen (48) zwischen der Seitenwand (20) und dem unteren Rand des Vordachs an seiner Unterseite offen ist, und daß im Übergangsbereich zwischen Vordach (38, 40) und Dach (14) obere Decken-Lüftungsöffnungen (50) angebracht sind.

2. Lüftungssystem nach Anspruch 1, dadurch gekennzeichnet, daß in die oberen Decken-Lüftungsöffnungen (48, 50) Gitter mit senkrechten Lamellen eingepaßt sind, um das Eindringen von Fremdkörpern in das Innere des Gehäuses (10) zu verhindern.

3. Lüftungssystem nach Anspruch 1 oder 2, dadurch gekennzeichnet, daß das Dach (14) flach ausgeführt und durch zwei Vordächer (38, 40) verlängert ist, die an zwei gegenüberliegenden Seitenwänden (20, 22) zwei Überstände (42) bilden, und das Dach (14) parallel verlaufende Längsnuten (58) aufweist, die als Regenrinnen dienen, und daß die oberen Deckenlüftungsöffnungen (50) in den durch die Regenrinnen begrenzten hervorstehenen Dachstreifen (60) angeordnet sind.

4. Lüftungssystem nach einem der vorhergehenden Ansprüche, dadurch gekennzeichnet, daß unterhalb der oberen Decken-Lüftungsöffnungen (50) Auffangkammern (56) angebracht sind, um das durch die Lüftungsöffnungen eintretende Regenwasser aufzufangen und an die Außenseite der Seitenwand (20) unter dem genannten Vordach (38, 40) abzuführen.

5. Lüftungssystem nach einem der vorhergehenden Ansprüche, dadurch gekennzeichnet, daß das rechteckige Gehäuse über zwei an einer Längswand (16) angebrachte Türzugänge (32, 34) sowie einem Boden-Lüftungsgitter (30) an der Querwand verfügt, an der der Transformator der Station (28) aufgestellt ist.

6. Lüftungssystem nach einem der vorhergehenden Ansprüche, dadurch gekennzeichnet, daß die Querwände (20, 22) von zwei Vordächern (38, 40) überdeckt werden, die durch ein mit Längsnuten versehenes Flachdach (14) verbunden sind, und daß die oberen Decken-Lüftungsöffnungen entlang der genannten Querwände angeordnet sind.

7. Lüftungssystem nach einem der vorhergehenden Ansprüche, dadurch gekennzeichnet, daß die Transformatorstation als fabrikfertige Betonstation ist.

Fig.1

Fig 9

Fig 8

Fig.2

Fig.3

Fig.4

Fig.5

Fig.6

Fig.7

Fig.10

Fig.11